# EUROPÄISCHE PATENTSCHRIFT

(11) **EP 3 061 687 B1**
(45) Veröffentlichungstag und Bekanntmachung des Hinweises auf die Patenterteilung: **17.07.2019**
(21) Anmeldenummer: 16152866.6
(22) Anmeldetag: 27.01.2016
(51) Int. Cl.: B64C 13/42, B64C 13/50, B64C 27/68, F16H 1/46

(54) **AKTUATOR FÜR LUFTFAHRTANWENDUNGEN**
ACTUATOR FOR AVIATION APPLICATIONS
ACTIONNEUR POUR APPLICATIONS AVIONIQUES

(30) Priorität: 26.02.2015 DE 102015203411
(43) Veröffentlichungstag der Anmeldung: 31.08.2016
(73) Patentinhaber: ZF Friedrichshafen AG, 88046 Friedrichshafen (DE)
(72) Erfinder: Götte, Jürgen, 34246 Vellmar (DE); Arnold, Uwe, 34132 Kassel (DE)

(56) Entgegenhaltungen:
- EP-A1- 1 342 663
- EP-A2- 1 262 687
- DE-A1-102013 202 221
- US-A- 3 679 956
- US-A- 4 289 996
- US-A- 4 304 375
- US-A1- 2004 007 923
- US-A1- 2007 051 847
- US-A1- 2010 150 719
- Jeff Hagen ET AL: "The X-38 V-201 Flap Actuator Mechanism", Proceedings of the 37th Aerospace Mechanisms Symposium, Johnson Space Center, May 19-21, 2004, 1 May 2004 (2004-05-01), pages 377-390, XP055508440, Retrieved from the Internet: URL:https://ntrs.nasa.gov/archive/nasa/cas i.ntrs.nasa.gov/20040084285.pdf [retrieved on 2018-09-20]

## Beschreibung

Die Erfindung betrifft einen Aktuator konfiguriert für eine Rotorblattverstellung eines Hubschraubers, umfassend eine elektromechanische Antriebseinrichtung, welche über ein nachgeschaltetes Getriebe mit einem Abtrieb verbunden ist, wobei die Antriebseinrichtung in unabhängig voneinander betreibbare Teilantriebe aufgeteilt ist.

Bei Luftfahrzeugen kommen Aktuatoren zur Anwendung, um Steuervorgaben eines Piloten in entsprechende Steuerfunktionen umzusetzen. So werden Aktuatoren beispielsweise bei Hubschraubern zur Rotorblattverstellung vorgesehen und leiten beispielsweise im Bereich einer Taumelscheibe gezielt deren axiale Verschiebung zu einem Rotormast und auch deren Neigung quer zum Rotormast ein, so dass im erstgenannten Fall eine kollektive Blattverstellung von Rotorblättern und im zweitgenannten Fall eine zyklische Blattverstellung realisierbar ist. Da ein Ausfall von Aktuatoren, je nachdem welche Steuervorgaben über diese umzusetzen sind, im schlimmsten Fall einen Absturz des jeweiligen Luftfahrzeuges zur Folge haben kann, sind Aktuatoren als redundante Systeme auszuführen, deren zumindest verminderte Funktionsfähigkeit auch bei Ausfall einzelner Komponenten noch sicherzustellen ist.

Die US 2010/0150719 A1 offenbart einen Aktuator für eine Rotorblattverstellung bei einem Hubschrauber, wobei sich dieser Aktuator aus einer elektromechanischen Antriebseinrichtung und einem nachgeschalteten Getriebe zusammensetzt. Die Antriebseinrichtung ist dabei als redundanter, mehrphasiger Elektromotor ausgeführt, welcher dementsprechend mehrere unabhängig voneinander betreibbare Teilantriebe in einem Gehäuse vereint. Die folgenden Dokumente offenbaren weitere bekannte Aktuatoren für Luftfahrtanwendungen:
- US3679956
- DE102013202221
- US2007/051847
- US4304375
- US4289996
- US2004/007923
- EP1262687
- EP1342663
- Jeff Hagen ET AL: "The X-38 V-201 Flap Actuator Mechanism",Proceedings of the 37th Aerospace Mechanisms Symposium, Johnson Space Center, May 19-21, 2004, 1. Mai 2004 (2004-05-01), Seiten 377-390

Ausgehend vom vorstehend beschriebenen Stand der Technik ist es nun die Aufgabe der vorliegenden Erfindung, einen Aktuator konfiguriert für eine Rotorblattverstellung eines Hubschraubers zu schaffen, welcher sich durch eine geringe Schadenanfälligkeit und damit hohe Zuverlässigkeit auszeichnet.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst ein Aktuator eine elektromechanische Antriebseinrichtung, welche über ein nachgeschaltetes Getriebe mit einem Abtrieb verbunden ist. Dabei ist die Antriebseinrichtung in unabhängig voneinander betreibbare Teilantriebe aufgeteilt. Der erfindungsgemäße Aktuator kommt dabei bei einer Rotorblattverstellung eines Hubschraubers zur Anwendung und kann hierbei entweder zur Bewegung einer Taumelscheibe vorgesehen sein, über die eine Blattverstellung der Rotorblätter des Hubschraubers umgesetzt wird, oder aber für eine Einzelblattverstellung vorgesehen sein, wobei der Aktuator dann zwischen dem Einzelblatt und dem Rotorkopf des Haupt- oder Heckrotors angeordnet ist.

Im Rahmen der Erfindung werden die unabhängig voneinander betreibbaren Teilantriebe der elektromechanischen Antriebseinrichtung dadurch realisiert, dass jeder Teilantrieb unabhängig mit Energie versorgt und auch geregelt werden kann. So ist jedem Teilantrieb, je nach Anzahl an Phasen, zumindest ein Generator mit nachgeschaltetem Gleichrichter zugeordnet, welcher mit dem Teilantrieb über je eine Versorgungsleitung (Lane) verbunden ist. Insbesondere bei Teilantrieben mit einer hohen Anzahl an Phasen können zur Versorgung der Wicklungen auch mehrere Generatoren, Gleichrichter und Versorgungsleitungen zugeordnet sein. Eine Regelung des einzelnen Teilantriebs wird dabei, je nach Phasenanzahl, über ein oder mehrere Leistungssteuereinheiten (PCU) geregelt, welche wiederum jeweils über je eine zugehörige Aktuatorkontrolleinheit (ACU) gesteuert werden. Insgesamt erfolgt eine Regelung über mehrere Flugkontrollcomputer (FCC), die zudem mit Informationen mehrerer Sensoren versorgt werden.

Die Erfindung umfasst nun die technische Lehre, dass zumindest zwei Teilantriebe räumlich voneinander getrennt sind, indem das Getriebe zwischen diesen Teilantrieben vorgesehen ist. Mit anderen Worten ist also das Getriebe zwischen zumindest zwei Teilantrieben platziert und trennt diese somit räumlich voneinander, indem der eine Teilantrieb auf der einen Seite des Getriebes und der andere Teilantrieb auf der anderen Seite des Getriebes vorgesehen ist. Des Weiteren ist das Getriebe als Planetengetriebe oder als Zykloidgetriebe ausgeführt.

Eine derartige Ausgestaltung eines Aktuators hat dabei den Vorteil, dass Beschädigungen des einen Teilantriebes, beispielsweise durch Feuer, schwerer auch zu einer Beschädigung des anderen Teilantriebes führen können, da ja das Getriebe zwischen beiden Teilantrieben sitzt. Insofern wird hierdurch die Schadensanfälligkeit des Aktuators vermindert und damit insgesamt die Zuverlässigkeit erhöht. Zugleich wird der Aktuator durch die nach wie vor vorhandenen, unabhängig voneinander betreibbaren Teilantriebe als redundantes System gestaltet, bei welchem auch bei einzelnen Ausfällen zumindest noch eine gewisse Steuerfunktion gewährleistet bleibt. Dadurch, dass das Getriebe entweder als Planetengetriebe oder als Zykloidgetriebe ausgeführt ist, kann ein belastbares Getriebe verwirklicht werden, wobei bei einem Zykloidgetriebe zudem die Gefahr einer Blockade durch Zahnbrüche vermindert ist.

Bei dem in der US 2010/0150719 A1 beschriebenen Aktuator sind hingegen die Teilantriebe in einem Motorgehäuse zusammengefasst, was zwar einen kompakten Aufbau ermöglicht, bei bestimmten Schäden an einem Teilantrieb, wie beispielsweise einem Feuer durch Kabelbrand, aber schnell auch zu einer Beschädigung der übrigen Teilantriebe führen kann. Im Extremfall kann dies einen Ausfall des kompletten Aktuators zur Folge haben.

Entsprechend einer Ausführungsform der Erfindung ist beidseitig des Getriebes jeweils ein Teilantrieb vorgesehen. In Weiterbildung dieser Ausführungsform ist dabei jeder Teilantrieb jeweils als Elektromotor mit sechs Phasen ausgeführt. Es werden dabei bevorzugt zwei 3-phasige Motoren zu einem Elektromotor zusammengefasst, was einen kompakten Aufbau ermöglicht. Weiter bevorzugt sind dem Elektromotor mit sechs Phasen dabei zwei Versorgungsleitungen (Lanes), zwei Leistungssteuereinheiten (PCUs) und zwei Aktuatorkontrolleinheiten (ACUs) zugeordnet, die jeweils dreien der sechs Phasen zugehörig sind. Des Weiteren wird insbesondere eine innere Redundanz gebildet, indem innerhalb des 6-phasigen Elektromotors eine räumliche, thermische, magnetische und elektrische Trennung der einzelnen Phasen vorgenommen wird, indem die den Versorgungsleitungen, PCUs und ACUs zugeordneten Wicklungen alternierend angeordnet sind.

Entsprechend einer alternativen Ausgestaltungsmöglichkeit sind beidseitig des Getriebes jeweils zwei Teilantriebe vorgesehen, wobei diese Teilantriebe dabei bevorzugt jeweils als Elektromotor mit drei Phasen ausgeführt sind. Hierdurch baut das System zwar in axialer Richtung etwas länger, die auf einer Seite in Summe ebenfalls sechs Phasen bildenden Elektromotoren sind jedoch ebenfalls voneinander getrennt.

Der eine oder auch die mehreren auf einer Seite des Getriebes vorgesehenen Teilantriebe sind im Sinne der Erfindung dann insbesondere in einem Gehäuse gekapselt, um eine Beeinträchtigung des oder der Teilantriebe von außen möglichst zu verhindern.

Es ist eine weitere Ausführungsform der Erfindung, dass den Teilantrieben eine gemeinsame Eingangswelle des Getriebes zugeordnet ist. Alle Teilantriebe der elektromechanischen Antriebseinrichtung treiben also über ein und dieselbe Eingangswelle in das Getriebe ein. Weiter bevorzugt ist zwischen der Eingangswelle und dem mindestens einen auf der jeweiligen Seite des Getriebes vorgesehenen Teilantrieb je eine Trennkupplung angeordnet, über welche eine mechanische Verbindung der Eingangswelle zu diesem mindestens einen Teilantrieb unterbrochen werden kann. Hierdurch kann ein weiterer Betrieb des Aktuators auch dann sichergestellt werden, wenn der eine oder die mehreren auf dieser Seite des Getriebes vorgesehenen Teilantriebe blockieren. In diesem Fall wird über die jeweilige Trennkupplung dann die mechanische Verbindung unterbrochen, so dass ein Antrieb über den oder die auf der jeweils anderen Seite des Getriebes sitzenden Teilantriebe nach wie vor realisiert werden kann.

Gemäß einer weiteren Ausführungsform der Erfindung verfügt das Getriebe über zwei Eingangswellen, wobei die eine Eingangswelle dem mindestens einen auf der einen Seite des Getriebes liegenden Teilantrieb und die andere Eingangswelle dem mindestens einen auf der anderen Seite des Getriebes liegenden Teilantrieb zugeordnet ist. Das Getriebe summiert dann Antriebsleistungen der Teilantriebe zum Abtrieb auf. Auch hierdurch kann beim Blockieren eines oder mehrerer Teilantriebe auf einer Seite nach wie vor eine ggf. eingeschränkte Steuerfunktion des Aktuators realisiert werden.

In Weiterbildung der Erfindung, ggf. in Weiterbildung der vorgenannten Ausführungsform, setzt sich das Getriebe aus mehreren Getriebestufen zusammen. Hierdurch kann zum einen eine geeignete Übersetzung von Antriebsbewegungen der Teilantriebe realisiert werden, sowie zum anderen, bei geeigneter Verschachtelung der Getriebestufen, auch dann eine Steuerfunktion garantiert werden, wenn eine Getriebestufe blockiert.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Bevorzugte Ausführungsformen der Erfindung, die nachfolgend erläutert werden, sind in den Zeichnungen dargestellt. Es zeigt:
- Fig. 1: eine schematische Ansicht eines Aktuators entsprechend einer ersten Ausführungsform der Erfindung;
- Fig. 2: einen Teil eines Aktuators gemäß einer zweiten Ausgestaltungsmöglichkeit der Erfindung;
- Fig. 3: eine weitere schematische Ansicht eines Teils des Aktuators aus Fig. 2;
- Fig. 4: eine schematische Darstellung eines Aktuators entsprechend einer dritten Ausführungsform der Erfindung; und
- Fig. 5: eine schematische Ansicht eines Aktuators gemäß einer vierten Ausgestaltungsmöglichkeit der Erfindung.

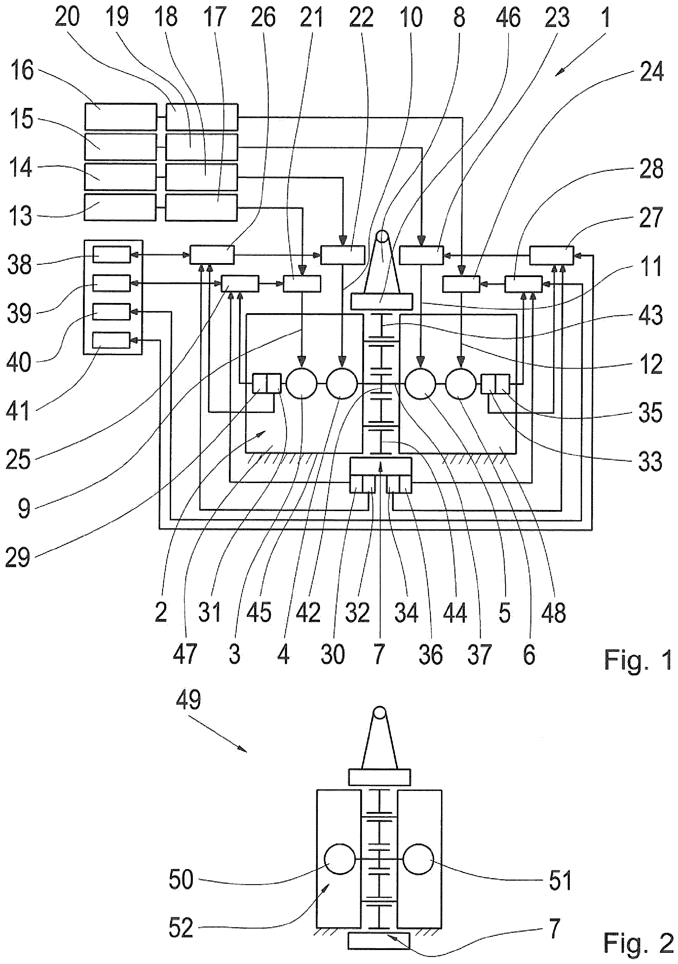

Aus Fig. 1 geht eine schematische Ansicht eines Aktuators 1 entsprechend einer ersten Ausführungsform der Erfindung hervor. Dabei ist dieser Aktuator 1 im Bereich einer Rotorblattverstellung eines Hubschraubers vorgesehen und ist hier Teil einer Taumelscheibensteuerung oder einer Einzelblattsteuerung von Haupt- oder Heckrotorblättern des Hubschraubers.

Wie in Fig. 1 zu erkennen ist, umfasst der Aktuator 1 eine elektromechanische Antriebseinrichtung 2, die in mehrere Teilantriebe 3, 4, 5 und 6 aufgeteilt ist und über ein nachgeschaltetes Getriebe 7 mit einem Abtrieb 8 des Aktuators 1 verbunden ist. Der Abtrieb 8 ist vorliegend dabei als Steuerhorn gestaltet, über welchen die durch die Antriebsrichtung 2 erzeugte und über das Getriebe 7 übersetzte Drehbewegung weiter auf hieran angebundene Komponenten übertragen wird.

Die Teilantriebe 3 bis 6 der Antriebseinrichtung 2 sind vorliegend unabhängig voneinander betreibbar, um den Aktuator 1 als redundantes System zu gestalten. So wird jeder der Teilantriebe 3 bis 6 über je eine, ihm zugeordnete Versorgungsleitung (Lane) 9 bzw. 10 bzw. 11 bzw. 12 versorgt, die jeweils die Verbindung zu je einem zugehörigen Generator 13 bzw. 14 bzw. 15 bzw. 16 mit je einem nachgeschalteten Gleichrichter 17 bzw. 18 bzw. 19 bzw. 20 herstellt. Innerhalb jeder Versorgungsleitung 9 bzw. 10 bzw. 11 bzw. 12 ist zudem je eine Leistungssteuereinheit (PCU) 21 bzw. 22 bzw. 23 bzw. 24 vorgesehen, über welche jeweils die dem zugehörigen Teilantrieb 3 bzw. 4 bzw. 5 bzw. 6 zugeführte Leistung geregelt wird.

Jeder Leistungssteuereinheit 21 bzw. 22 bzw. 23 bzw. 24 ist wiederum je eine Aktuatorkontrolleinheit (ACU) 25 bzw. 26 bzw. 27 bzw. 28 zugeordnet, welche mit je einem Bipolartransistor mit isolierter Gate-Elektrode (IGBT) ausgestattet ist und die zugehörige Leistungssteuereinheit 21 bzw. 22 bzw. 23 bzw. 24 regelt. Zu diesem Zweck ist jede Aktuatorkontrolleinheit 25 bzw. 26 bzw. 27 bzw. 28 mit jeweils zwei Sensoren 29 und 30 bzw. 31 und 32 bzw. 33 und 34 bzw. 35 und 36 verbunden, wobei über die Sensoren 29, 31, 33 und 35 jeweils eine Winkelposition einer Eingangswelle 37 des Getriebes 7 erfasst wird, während die Sensoren 30, 32, 34 und 36 jeweils die Winkelposition des Abtriebes 8 ermitteln. Wie zudem in Fig. 1 zu erkennen ist, stehen die Aktuatorkontrolleinheiten 25 bis 28 jeweils im Datenaustausch mit zugehörigen Flugkontrollcomputern (FCC) 38 bis 41.

Das Getriebe 7 ist im vorliegenden Fall als Planetengetriebe gestaltet und setzt sich aus einem Sonnenrad 42, einem mehrere Planetenräder 43 und 44 führenden Planetenträger 45 und einem Hohlrad 46 zusammen. Dabei ist das Sonnenrad 42 drehfest auf der gemeinsamen Eingangswelle 37 drehfest angeordnet, die einer gemeinsamen Anbindung von Rotoren der Teilantriebe 3 bis 6 dient. Die Planetenräder 43 und 44 kämmen jeweils sowohl mit dem radial innenliegenden Sonnenrad 42, als auch mit dem umliegenden Hohlrad 46, wobei der die Planetenräder 43 und 44 führende Planetenträger 45 gemeinsam mit Statoren der Teilantriebe 3 bis 6 stillgesetzt ist, während das Hohlrad 46 drehfest mit dem Abtrieb 8 verbunden ist. Über das Getriebe 7 wird dabei eine gemeinsam durch die Teilantriebe 3 bis 6 dargestellte Antriebsbewegung ins Langsame auf den Abtrieb 8 übersetzt.

Als Besonderheit ist das Getriebe 7 nun zwischen den Teilantrieben 3 und 4 auf der einen Seite und den Teilantrieben 5 und 6 auf der anderen Seite angeordnet, so dass die Teilantriebe 3 und 4 räumlich von den Teilantrieben 5 und 6 getrennt werden. Hierdurch kann verhindert werden, dass beispielsweise ein Feuer auf Seiten der Teilantriebe 3 und 4 direkt auch zu einer Beschädigung der Teilantriebe 5 und 6 und umgekehrt führen kann, da diese über das zwischenliegende Getriebe 7 abgeschirmt werden. Die Teilantriebe 3 bis 6 sind dabei jeweils als Elektromotoren mit je drei Phasen ausgeführt. Zudem sind die auf der jeweiligen Seite des Getriebes 7 liegenden Teilantriebe 3 und 4 bzw. 5 und 6 in Bezug auf die Eingangswelle 37 axial hintereinanderliegend angeordnet und in je einem gemeinsamen Gehäuse 47 bzw. 48 aufgenommen.

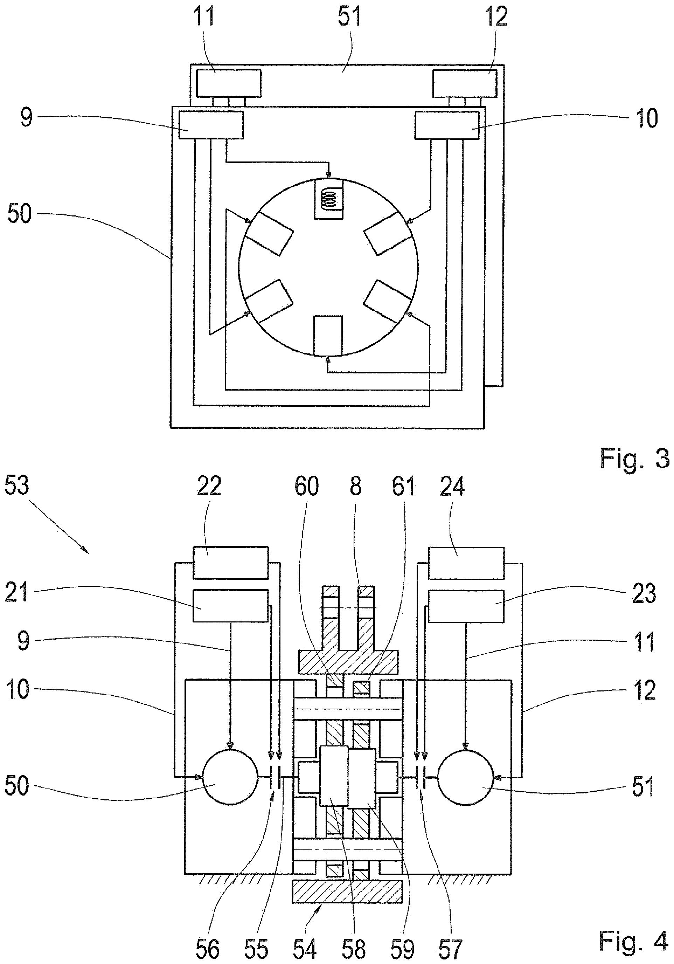

Ferner geht aus Fig. 2 eine schematische Ansicht eines Teils eines Aktuators 49 entsprechend einer zweiten Ausgestaltungsmöglichkeit der Erfindung hervor. Der Aktuator 49 entspricht dabei im Wesentlichen der Variante nach Fig. 1, wobei im Unterschied zu der vorhergehenden Variante insgesamt nur zwei Teilantriebe 50 und 51 einer elektromechanischen Antriebseinrichtung 52 vorgesehen sind, die dabei über das zwischenliegende Getriebe 7 voneinander getrennt sind. Jeder Teilantrieb 50 bzw. 51 ist dabei als Elektromotor mit je sechs Phasen ausgeführt, wobei jeder Teilantrieb 50 bzw. 51, wie aus der weiteren Fig. 3 zu erkennen ist, über je zwei Versorgungsleitungen 9 und 10 bzw. 11 und 12 versorgt wird. Innerhalb des jeweiligen Teilantriebes 50 bzw. 51 sind die einzelnen Wicklungen, wie in Fig. 3 anhand des Teilantriebes 50 zu erkennen ist, dabei alternierend mit je einer der zugehörigen Versorgungsleitungen 9 und 10 bzw. 11 und 12 verbunden. Insofern sind im Falle der Ausführungsform nach den Fig. 2 und 3 zwei Teilantriebe nach Fig. 1 zu je einem Teilantrieb 50 bzw. 51 zusammengefasst. Wesentlich ist dabei, dass innerhalb des jeweiligen Teilantriebes 50 bzw. 51 auch eine innere Redundanz gebildet wird, indem die einzelnen Phasen räumlich, thermisch, magnetisch und elektrisch voneinander getrennt sind. Hierdurch kann der einzelne Teilantrieb 50 bzw. 51 auch dann noch weitestgehend betrieben werden, wenn eine der Phasen ausfällt. Im Übrigen entspricht die Variante nach den Fig. 2 und 3 dann der Ausführungsform nach Fig. 1, so dass auf das hierzu Beschriebene Bezug genommen wird.

Des Weiteren zeigt Fig. 4 eine schematische Ansicht eines Teils eines Aktuators 53 entsprechend einer dritten Ausführungsform der Erfindung, welche dabei wiederum weitestgehend der Variante nach Fig. 1 entspricht. Im Unterschied zu der Ausführungsform nach Fig. 1 und in Übereinstimmung mit der Ausgestaltungsmöglichkeit nach den Fig. 2 und 3 sind dabei wiederum nur zwei Teilantriebe 50 und 51 vorgesehen, die als Elektromotoren mit sechs Phasen ausgeführt sind und über ein zwischenliegendes Getriebe 54 räumlich voneinander getrennt werden.

Allerdings ist jeder Teilantrieb 50 bzw. 51 mit einer gemeinsamen Eingangswelle 55 des Getriebes 54 über je eine zwischenliegende Trennkupplung 56 bzw. 57 verbunden, welche mit den Leistungssteuereinheiten 21 und 22 bzw. 23 und 24 der dem jeweiligen Teilantrieb 50 bzw. 51 zugeordneten Versorgungsleitungen 9 und 10 bzw. 11 und 12 regelungstechnisch in Verbindung steht, so dass die Leistungssteuereinheiten 21 und 22 bzw. 23 und 24 jeweils gezielt ein Öffnen der Trennkupplung 56 bzw. 57 hervorrufen können. Hierdurch kann bei Blockieren einer der Teilantriebe 50 oder 51 gezielt die jeweilige mechanische Verbindung zum Getriebe 54 unterbrochen werden und somit noch ein Antrieb über den jeweils anderen Teilantrieb 51 oder 50 dargestellt werden.

Als weiterer Unterschied ist das Getriebe 54 im Falle der Variante nach Fig. 4 als Zykloidgetriebe ausgeführt, bei welchem auf der Eingangswelle 55 zwei Exzenter 58 und 59 vorgesehen sind, die über je eine Kurvenscheibe 60 bzw. 61 mit dem Abtrieb 8 gekoppelt sind. Bei einem Zykloidgetriebe treten keine Zahnbrüche auf, so dass die Gefahr einer möglichen Blockade des Getriebes deutlich reduziert ist.

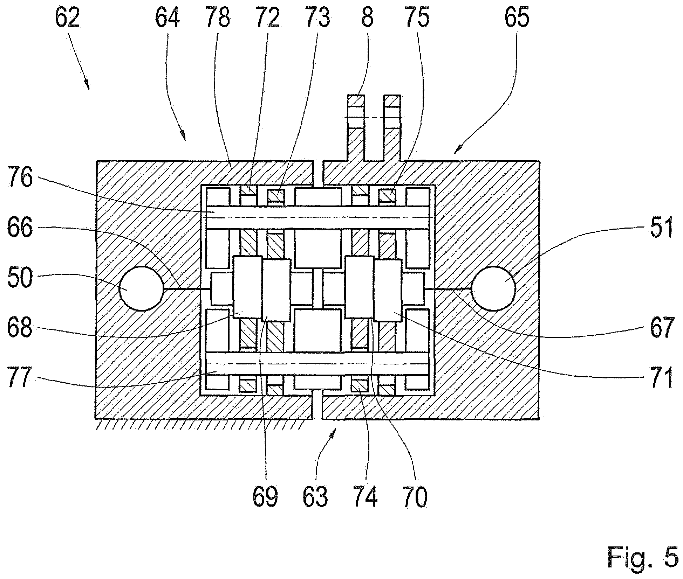

Schließlich geht aus Fig. 5 noch eine schematische Darstellung eines Aktuators 62 gemäß einer vierten Ausführungsform der Erfindung hervor. Dabei entspricht dieser Aktuator 62 im Wesentlichen dem Aktuator 49 nach den Fig. 2 und 3, wobei ein einziger Unterschied hierbei bezüglich der Ausgestaltung eines Getriebes 63 besteht. Dieses Getriebe 63 ist nämlich erneut, wie schon bei der Variante nach Fig. 4, als Zykloidgetriebe gestaltet, setzt sich aber in diesem Fall aus zwei Getriebestufen 64 und 65 zusammen, über welche Antriebsbewegungen der Teilantriebe 50 und 51 zum Abtrieb 8 hin aufsummiert werden. Hierzu verfügt das Getriebe 63 über zwei Eingangswellen 66 und 67, von welchen die Eingangswelle 66 mit dem Teilantrieb 50 und die Eingangswelle 67 mit dem Teilantrieb 51 verbunden ist. Jede der Eingangswellen 66 und 67 trägt jeweils insgesamt zwei Exzenter 68 und 69 bzw. 70 und 71, die mit je einer Kurvenscheibe 72 bzw. 73 bzw. 74 bzw. 75 in Verbindung stehen und diese antreiben. Alle Kurvenscheiben 72 bis 75 führen dabei gemeinsame Bolzen 76 und 77, wobei allerdings die Kurvenscheiben 72 und 73 radial umliegend mit einem feststehenden Bolzenring 78 in Kontakt stehen, während ein Bolzenring 79 im Falle der Kurvenscheiben 74 und 75 drehfest mit dem Abtrieb 8 verbunden ist. Durch diesen Aufbau des Getriebes 63 wird dabei erreicht, dass auch bei Blockieren einer der beiden Getriebestufen 64 oder 65 noch eine evtl. eingeschränkte Steuerfunktion über die jeweils andere Getriebestufe 65 oder 64 realisiert werden kann.

Mittels der erfindungsgemäßen Ausgestaltungen eines Aktuators kann dabei dessen Schadenanfälligkeit reduziert und damit eine Zuverlässigkeit gesteigert werden.

### Bezugszeichen

- 1: Aktuator
- 2: Antriebseinrichtung
- 3: Teilantrieb
- 4: Teilantrieb
- 5: Teilantrieb
- 6: Teilantrieb
- 7: Getriebe
- 8: Abtrieb
- 9: Versorgungsleitung
- 10: Versorgungsleitung
- 11: Versorgungsleitung
- 12: Versorgungsleitung
- 13: Generator
- 14: Generator
- 15: Generator
- 16: Generator
- 17: Gleichrichter
- 18: Gleichrichter
- 19: Gleichrichter
- 20: Gleichrichter
- 21: Leistungssteuereinheit
- 22: Leistungssteuereinheit
- 23: Leistungssteuereinheit
- 24: Leistungssteuereinheit
- 25: Aktuatorkontrolleinheit
- 26: Aktuatorkontrolleinheit
- 27: Aktuatorkontrolleinheit
- 28: Aktuatorkontrolleinheit
- 29: Sensor
- 30: Sensor
- 31: Sensor
- 32: Sensor
- 33: Sensor
- 34: Sensor
- 35: Sensor
- 36: Sensor
- 37: Eingangswelle
- 38: Flugkontrollcomputer
- 39: Flugkontrollcomputer
- 40: Flugkontrollcomputer
- 41: Flugkontrollcomputer
- 42: Sonnenrad
- 43: Planetenrad
- 44: Planetenrad
- 45: Planetenträger
- 46: Hohlrad
- 47: Gehäuse
- 48: Gehäuse
- 49: Aktuator
- 50: Teilantrieb
- 51: Teilantrieb
- 52: Antriebseinrichtung
- 53: Aktuator
- 54: Getriebe
- 55: Eingangswelle
- 56: Trennkupplung
- 57: Trennkupplung
- 58: Exzenter
- 59: Exzenter
- 60: Kurvenscheibe
- 61: Kurvenscheibe
- 62: Aktuator
- 63: Getriebe
- 64: Getriebestufe
- 65: Getriebestufe
- 66: Eingangswelle
- 67: Eingangswelle
- 68: Exzenter
- 69: Exzenter
- 70: Exzenter
- 71: Exzenter
- 72: Kurvenscheibe
- 73: Kurvenscheibe
- 74: Kurvenscheibe
- 75: Kurvenscheibe
- 76: Bolzen
- 77: Bolzen
- 78: Bolzenring
- 79: Bolzenring

## Patentansprüche

1. Aktuator (1; 49; 53; 62) konfiguriert für eine Rotorblattverstellung eines Hubschraubers, umfassend eine elektromechanische Antriebseinrichtung (2; 52), welche über ein nachgeschaltetes Getriebe (7; 54; 63) mit einem Abtrieb (8) verbunden ist, wobei die Antriebseinrichtung (2; 52) in unabhängig voneinander betreibbare Teilantriebe (3, 4, 5, 6; 50, 51) aufgeteilt ist, **dadurch gekennzeichnet, dass** zumindest zwei Teilantriebe (3, 4, 5, 6; 50, 51) räumlich voneinander getrennt sind, indem das Getriebe (7; 54; 63) zwischen diesen Teilantrieben (3, 4, 5, 6; 50, 51) vorgesehen ist, und dass das Getriebe (7; 54; 63) als Planetengetriebe oder als Zykloidgetriebe ausgeführt ist.

2. Aktuator (49; 53; 62) nach Anspruch 1, **dadurch gekennzeichnet, dass** beidseitig des Getriebes (7; 54; 63) jeweils ein Teilantrieb (50, 51) vorgesehen ist.

3. Aktuator (49; 53; 62) nach Anspruch 2, **dadurch gekennzeichnet, dass** jeder Teilantrieb (50, 51) jeweils als Elektromotor mit sechs Phasen ausgeführt ist.

4. Aktuator (1) nach Anspruch 1, **dadurch gekennzeichnet, dass** beidseitig des Getriebes (7) jeweils zwei Teilantriebe (3, 4, 5, 6) vorgesehen sind.

5. Aktuator (1) nach Anspruch 4, **dadurch gekennzeichnet, dass** jeder Teilantrieb (3, 4, 5, 6) jeweils als Elektromotor mit drei Phasen ausgeführt ist.

6. Aktuator (1; 49; 53; 62) nach Anspruch 1, **dadurch gekennzeichnet, dass** den Teilantrieben (3, 4, 5, 6; 50, 51) eine gemeinsame Eingangswelle (37; 55) des Getriebes (7; 54) zugeordnet ist.

7. Aktuator (53) nach Anspruch 6, **dadurch gekennzeichnet, dass** zwischen der Eingangswelle (55) und dem mindestens einen, auf der jeweiligen Seite des Getriebes (54) vorgesehenen Teilantrieb (50, 51) je eine Trennkupplung (56, 57) angeordnet ist, über welche eine mechanische Verbindung der Eingangswelle (55) zu diesem mindestens einen Teilantrieb (50, 51) unterbrechbar ist.

8. Aktuator (62) nach Anspruch 1, **dadurch gekennzeichnet, dass** das Getriebe (63) über zwei Eingangswellen (66, 67) verfügt, wobei die eine Eingangswelle (66) dem mindestens einen auf der einen Seite des Getriebes (63) liegenden Teilantrieb (50) und die andere Eingangswelle (67) dem mindestens einen auf der anderen Seite des Getriebes (63) liegenden Teilantrieb (51) zugeordnet ist, und wobei das Getriebe (63) Antriebsleistungen der Teilantriebe (50, 51) zum Abtrieb (8) aufsummiert.

9. Aktuator (62) nach Anspruch 1, **dadurch gekennzeichnet, dass** sich das Getriebe (63) aus mehreren Getriebestufen (64, 65) zusammensetzt.

## Claims

1. Actuator (1; 49; 53; 62) designed for rotor blade adjustment of a helicopter, comprising an electromechanical drive device (2; 52) which is connected to an output drive (8) by means of a downstream gear mechanism (7; 54; 63), wherein the drive device (2; 52) is split up into component drives (3, 4, 5, 6; 50, 51) which can be operated independently of one another, **characterized in that** at least two component drives (3, 4, 5, 6; 50, 51) are physically separated from one another by way of the gear mechanism (7; 54; 63) being provided between these component drives (3, 4, 5, 6; 50, 51), and **in that** the gear mechanism (7; 54; 63) is embodied as a planetary gear mechanism or as a cycloid gear mechanism.

2. Actuator (49; 53; 62) according to Claim 1, **characterized in that** in each case one component drive (50, 51) is provided on either side of the gear mechanism (7; 54; 63).

3. Actuator (49; 53; 62) according to Claim 2, **characterized in that** each component drive (50, 51) is embodied as an electric motor with six phases.

4. Actuator (1) according to Claim 1, **characterized in that** in each case two component drives (3, 4, 5, 6) are provided on either side of the gear mechanism (7).

5. Actuator (1) according to Claim 4, **characterized in that** each component drive (3, 4, 5, 6) is embodied as an electric motor with three phases.

6. Actuator (1; 49; 53; 62) according to Claim 1, **characterized in that** a common input shaft (37; 55) of the gear mechanism (7; 54) is associated with the component drives (3, 4, 5, 6; 50, 51).

7. Actuator (53) according to Claim 6, **characterized in that** a respective separating clutch (56, 57) is arranged between the input shaft (55) and the at least one component drive (50, 51) which is provided on the respective side of the gear mechanism (54), it being possible for a mechanical connection of the input shaft (55) to the said at least one component drive (50, 51) to be interrupted by means of the said separating clutch.

8. Actuator (62) according to Claim 1, **characterized in that** the gear mechanism (63) has two input shafts (66, 67), wherein one input shaft (66) is associated with the at least one component drive (50) which is situated on one side of the gear mechanism (63) and the other input shaft (67) is associated with the at least one component drive (51) which is situated on the other side of the gear mechanism (63), and wherein the gear mechanism (63) adds up drive outputs of the component drives (50, 51) to form the output drive (8).

9. Actuator (62) according to Claim 1, **characterized in that** the gear mechanism (63) is made up of a plurality of gear mechanism stages (64, 65).

## Revendications

1. Actionneur (1 ; 49 ; 53 ; 62), configuré pour un positionnement de pale de rotor d'un hélicoptère, comprenant un dispositif d'entraînement (2 ; 52) électromécanique qui est relié à une prise de force (8) par le biais d'une boîte de transmission (7 ; 54 ; 63) montée en aval, le dispositif d'entraînement (2 ; 52) étant divisé en mécanismes d'entraînement partiels (3, 4, 5, 6 ; 50, 51) pouvant fonctionner indépendamment les uns des autres, **caractérisé en ce qu'**au moins deux mécanismes d'entraînement partiels (3, 4, 5, 6 ; 50, 51) sont séparés l'un de l'autre dans l'espace du fait que la boîte de transmission (7 ; 54 ; 63) est disposée entre ces mécanismes d'entraînement partiels (3, 4, 5, 6 ; 50, 51), et **en ce que** la boîte de transmission (7 ; 54 ; 63) est réalisée sous la forme d'un engrenage planétaire ou d'un engrenage cycloïdal.

2. Actionneur (49 ; 53 ; 62) selon la revendication 1, **caractérisé en ce qu'**un mécanisme d'entraînement partiel (50, 51) se trouve respectivement des deux côtés de la boîte de transmission (7 ; 54 ; 63).

3. Actionneur (49 ; 53 ; 62) selon la revendication 2, **caractérisé en ce que** chaque mécanisme d'entraînement partiel (50, 51) est respectivement réalisé sous la forme d'un moteur électrique à six phases.

4. Actionneur (1) selon la revendication 1, **caractérisé en ce que** deux mécanismes d'entraînement partiels (3, 4, 5, 6) se trouvent respectivement des deux côtés de la boîte de transmission (7).

5. Actionneur (1) selon la revendication 4, **caractérisé en ce que** chaque mécanisme d'entraînement partiel (3, 4, 5, 6) est respectivement réalisé sous la forme d'un moteur électrique à trois phases.

6. Actionneur (1 ; 49 ; 53 ; 62) selon la revendication 1, **caractérisé en ce qu'**un arbre d'entrée commun (37 ; 55) de la boîte de transmission (7 ; 54) est respectivement associé aux mécanismes d'entraînement partiels (3, 4, 5, 6 ; 50, 51).

7. Actionneur (53) selon la revendication 6, **caractérisé en ce qu'**entre l'arbre d'entrée (55) et l'au moins un mécanisme d'entraînement partiel (50, 51) qui se trouve sur le côté respectif de la boîte de transmission (54) est disposé un accouplement séparateur (56, 57) par le biais duquel peut être interrompue une liaison mécanique de l'arbre d'entrée (55) et cet au moins un mécanisme d'entraînement partiel (50, 51).

8. Actionneur (62) selon la revendication 1, **caractérisé en ce que** la boîte de transmission (63) dispose de deux arbres d'entrée (66, 67), l'un des arbres d'entrée (66) étant associé à l'au moins un mécanisme d'entraînement partiel (50) qui se trouve d'un côté de la boîte de transmission (63) et l'autre arbre d'entrée (67) au mécanisme d'entraînement partiel (51) qui se trouve de l'autre côté de la boîte de transmission (63), et mécanisme d'entraînement partiel (50) qui se trouve d'un côté de la boîte de transmission (63) additionnant les puissances d'entraînement des mécanismes d'entraînement partiels (50, 51) vers la prise de force (8).

9. Actionneur (62) selon la revendication 1, **caractérisé en ce que** la boîte de transmission (63) se compose de plusieurs rapports d'engrenage (64, 65).
